# EUROPEAN PATENT APPLICATION

(11) **EP 2 067 795 A1**
(43) Date of publication of application: **10.06.2009**
(21) Application number: 07122306.9
(22) Date of filing: 04.12.2007
(51) Int. Cl.: C08F 14/06, C08F 259/04

(54) **A method for producing a functional vinyl halide polymer**

(71) Applicant: Formosa Plastics Corporation, Taipei (TW)
(72) Inventor: Lin, Cheng-Jung, Taipei (TW); Chen, Kwang-Ming, 814, Kaohsiung County (TW); Hung, Wan-Tun, 814, Kaohsiung County (TW); Ming-Pin, 814, Kaohsiung County (TW); Su, Te-Shuan, 814, Kaohsiung County (TW); Chen, Yu-Chen, 814, Kaohsiung County (TW); Chen, Chung-Chan, 814, Kaohsiung County (TW); Huang, Ming-Chung, 814, Kaohsiung County (TW)
(74) Representative: Viering, Jentschura & Partner

(57) **Abstract**

This invention offers a functional vinyl halide polymer that has excellent processing properties for the end-user processing without any extra processing aid. This functional vinyl halide polymer has good fusion, lubrication and melting strength in processing. The finished products show a good characterization of high transparence, low air-mark and low flow-mark. The functional vinyl halide polymer is produced by a solution, bulk or suspension polymerization. Vinyl halide or a monomer mixture comprising mainly vinyl halide is polymerized in an aqueous medium in the presence of an acrylic copolymer latex/powder to obtain the functional vinyl halide polymer. The functional vinyl halide polymer manufacturing process mainly comprises the copolymerization or graft-polymerization of: (A) 90.0 wt % ∼ 99.9 wt % based on the total composition of the vinyl halide or the monomer mixture, and (B) 10.0 wt % ∼ 0.1 wt % based on the total composition of the alkyl acrylate monomers or the acrylic polymer latex/powder, wherein the former can be added stepwisely or all in one time and the later can be charged continuously into reactor during polymerization or charged into a reactor before polymerization.

## Description

### BACKGROUND OF THE INVENTION

### FIELD OF THE INVENTION

The invention relates to a functional vinyl halide polymer, and particularly provides a process to obtain a halide resin for a high performance composite material which can be processed without any processing aid, shows good fusion (gelation), lubrication and melting strength, etc. in processing.

### DESCRIPTION OF THE RELATED ART

For recent years, the progress of the PVC processing technique is innovative and improved day by day to achieve a higher quality, such as high transparency or better mechanical properties.

To improve PVC quality, generally speaking, PVC resin must have a good fusion which becomes the goal of many PVC resin producers.

Modified PVC creates a good opportunity to let PVC resin processing technique comply with processing quality. In principal, the fusion of PVC resin depends on the processing method and the product quality, and the better the product quality, the higher PVC resin value.

### SUMMARY OF THE INVENTION

One object of the present invention is to offer a functional vinyl halide polymer that has excellent processing properties for the end-user processing without any extra processing aid. This functional vinyl halide polymer has good fusion, lubrication and melting strength in processing. The finished products show a good characterization of high transparence, low air-mark and low flow-mark.

The other object of the present invention is to provide the functional vinyl halide polymer produced by a solution, bulk or suspension polymerization. Vinyl halide or a monomer mixture comprising mainly vinyl halide is polymerized in an aqueous medium in the presence of an acrylic copolymer latex/powder to obtain the functional vinyl halide polymer.

The another object of the present invention is to provide the manufacturing process of the functional vinyl halide polymer comprising the copolymerization or graft-polymerization of:
(A) 90.0 wt % ∼ 99.9 wt % based on the total composition of the vinyl halide or the monomer mixture, and
(B) 10.0 wt % ∼ 0.1 wt % based on the total composition of the alkyl acrylate monomers or the acrylic polymer latex/powder,
wherein the former can be added stepwisely or all in one time and the later can be charged continuously into reactor during polymerization or charged into a reactor before polymerization.

### DETAILED DESCRIPTION OF THE INVENTION

Although PVC resin shows superior physical and chemical properties, the resin has an inherent physical property drawback-poor processability, in other words, its higher processing temperature approaches its decomposition temperature that results in a serious risk of decomposition, thus the application scope thereof is limited. To solve this deterioration problem, processing aids are developed to be incorporated in PVC resin, thus both of soft PVC or rigid PVC show a great innovation. So presently all PVC resin processors add processing aids to let PVC resin show better fusion.

For this reason, an extra processing aid should be incorporated in PVC resin to get better fusion and overcome the deterioration problem during processing. After several years tests, research and development, the inventor of the present invention finds that alkyl acrylates monomers or alkyl acrylates polymers are added into a vinyl halide monomer or a vinyl halide monomer based polymerizable monomer mixture to conduct graft or copolymerization via a solution, bulk, or suspension process, the resulted polyvinyl halide resin without the addition of any processing aid shows superior fusion, lubrication and high transparency.

The processed products thereof also show good processing properties, such as low flow-mark, low air-mark and high melt strength etc., thus can be used in various polyvinyl halide applications: such as processing techniques including roll mill, extrusion, blown film, foaming etc., and the resulted products contain soft, semi-rigid and rigid types with transparent, semi-transparent and non-transparent appearances, especially the transparent rigid product shows excellent transparency, high gloss and low haze.

The purpose of the present invention is to provide a manufacturing process of the functional polyvinyl halide resin without the addition of any processing aid.

According to the invention, the functional polyvinyl halide resin is produced as follows:
(1) 10.0 wt% ∼ 0.1 wt% based on the total composition of alkyl acrylate monomers or alkyl acrylate/acrylate based polymer latex or powder;
(2) 90.0 wt% ∼ 99.9 wt% based on the total composition of a vinyl halide monomer or a vinyl halide monomer based polymerizable monomer mixture;
are used to conduct copolymerization or graft-reaction, wherein the vinyl halide monomer or the vinyl halide monomer based polymerizable monomer mixture can added stepwisely or all in one time, wherein the first section is to add stepwisely before polymerization with proportion of 50% ∼ 70% and the second section is continuously fed with proportion of 50% ∼30%, and the percentage of the vinyl halide monomer in the vinyl halide monomer based polymerizable monomer mixture should be not less than 55%.

Alkyl acrylate monomers or alkyl acrylate/acrylate based polymer latex or powder is continuously fed during polymerization or added before polymerization; the way of the polymer latex addition is to be fed into a polymerization reactor before polymerization reaction, or continuously fed into the reactor during reaction, while the polymer powder is incorporated into the polymerization reactor prior to the reaction.

Continuously batchwisely added in the polymerization of the invention, the alkyl acrylate monomers are selected from methyl methacrylate (MMA), ethyl methacrylate, n-propyl methacrylate, isopropyl methacrylate, n-butyl methacrylate, isobutyl methacrylate, stearyl methacrylate, phenyl methacrylate, benzyl methacrylate, all of them can be substituted with the following groups; halogen, hydroxyl, alkoxy, alkylthio, cyano etc.

According to the present invention, the above mentioned alkyl acrylates/acrylates polymer latex/powder can be an optional grafting or core-shell structures including unicore-unishell, unicore-multishell, multicore-unishell or multicore-multishell. The composition of two core-shell structures in the latex can be adjusted in accordance with the desired physical properties.

The acrylic copolymer latex/powder added during the polymerization is produced by an emulsion, solution or bulk polymerization in the mode of an optional grafting. It has different structures including unicore-unishell, unicore-multishell, multicore-unishell or multicore-multishell. In addition, the acrylic copolymer powder can be produced by spray dryer and salt out.

Latex is a polymer with the core-shell structure, and can be produced via a solution or emulsion polymerization, and the way of polymerization may be a batchwise, semi-batchwise or continuous mode.

Latex can be dried with salt-out or spray-drying to become a powder. Latex can be added continuously into the polymerization reactor during polymerization or added prior to polymerization to conduct copolymerization or graft-reaction. The dose of latex is 10.0%∼0.01%, preferably 4.0%∼0.02%, based on the weight of the vinyl halide monomer or the polymerization monomers mixture, and the dose of powder is 10.0%∼0.1% preferably 8.0%∼0.2%, based on the weight of the vinyl halide monomer or the polymerization monomers mixture.

In the present invention, the aforementioned resin powder obtained from a vinyl halide monomer or a vinyl halide monomer based polymerizable monomer mixture includes vinyl halide homo-polymer and copolymer, for example, polyvinyl chloride or copolymer of vinyl chloride and other monomers, wherein copolymer is made from the copolymerization of more than 50wt% of vinyl halide and the balance of other monomers. The monomers to be copolymerized contain vinyl alkanoates, such as vinyl acetate; vinylidene halides, such as vinylidene chloride; alkyl esters of carboxylic acids, such as acrylic acid, ethyl acrylate, 2-ethyl hexyl acrylate, etc. and unsaturated hydrocarbons, such as allyl acetate, etc.

The initiator used in the polymerization of the functional polyvinyl halide composites is a water soluble or oil soluble organic peroxide which can generate a free radical under heating, e.g. hydroperoxides, dialkyl peroxide, peroxyketal, diacyl peroxide, peroxyester, peroxymonocarbonate, peroxydicarbonates etc., or a photo-decomposable initiator. All of them are known from the arts and can be applied in the polymerization of the present invention. As for dispersants which are also known in the arts, partially hydrolyzed polyvinyl alcohols (PVA) with different degrees of hydrolysis and hydroxyl propyl methyl celluloses (HPMC) with different viscosities may be also incorporated in the reaction.

Depending on the actual demand, other heat stabilizers, lubricants, colorants, plasticizers or fillers may be added together in compounding.

Now the invention is further explained with examples which are used to illustrate the features of the present invention, without restricting the invention in any way whatsoever.

### Comparative Example:

70kg of de-ionic pure water, 56g of a dispersant-polyvinyl alcohol (PVA with a hydrolysis degree of 78 mol%) are added into a 200 liter polymerization tank. After firmly closing the cap of the tank and evacuated to -740mmHg of vacuum for 10 minutes, 70kg of vinyl chloride monomer and 0.7g of a peroxide initiator of tert-Butyl peroxyneodecanote (BND) are incorporated under a paddle stirrer agitation with a rotation speed of 390rpm and raising the temperature to 64°C to proceed polymerization for 5 hours, then an antioxidant is added to stop polymerization upon a pressure drop of -1.5kg/cm², the un-reacted vinyl chloride monomer is recycled, and PVC product is discharged, dried to become a powder sample.

### Example 1 :

70kg of de-ionic pure water, 56g of a dispersant-polyvinyl alcohol (PVA with a hydrolysis degree of 78 mol%) are added into a 200 liter polymerization tank. After firmly closing the cap of the tank and vacuumized to -740mmHg for 10 minutes, 70kg of vinyl chloride monomer and 0.56g of a peroxide initiator-BND (tert-Butyl peroxyneodecanote) are incorporated with raising the temperature to 64°C to proceed polymerization for 90 minutes, then a monomer mixture of methyl methacrylate (MMA) and butyl acrylate (BA) is continuously added for 30 minutes. After the addition is completed, a polymerization reaction is proceeded for 3 hours, then a powder sample is collected, wherein the proportion of MMA and BA in the continuous feed is 140g vs 28g.

### Example 2 :

70kg of de-ionic pure water, 56g of a dispersant-polyvinyl alcohol (PVA with a hydrolysis degree of 78 mol%), 140g of MMA and 28g of BA are added into a 200 liter polymerization tank. After firmly closing the cap of the tank and evacuated to -740mmHg of vacuum for 10 minutes, 70kg of vinyl chloride monomer and 0.56g of a peroxide initiator-BND are incorporated with raising the temperature to 64°C to proceed polymerization for 5 hours, then stopping the reaction, and a powder sample is collected.

After drying, the resulted PVC powder is conducted the following physical property tests:

### 1. Roll-sheeting test

Example formulation: PVC (K=60): 100 parts, organotin stabilizer: 1.1 parts, lubricant: 0.6parts, operation temperature: 190°C, time: 3 minutes, sheet thickness: 0.3mm.

Comparative example formulation: PVC (K=60): 100 parts, organotin stabilizer: 1.1 parts, processing aid: 1.2 parts, lubricant: 0.6 parts, operation temperature: 190°C, time: 3 minutes, sheet thickness: 0.3mm.

### 2. Fusion test :

Example formulation: PVC (K=60): 100 parts, organotin stabilizer: 1.1 parts, lubricant: 0.6 parts, plasticorder: HAAKE BUCHLER SYSTEM 40, set temperature: 140°C, rotation speed: 45 rpm.

Comparative example formulation: PVC (K=60): 100 parts, organotin stabilizer: 1.1 parts, processing aid: 1.2 parts, lubricant: 0.6 parts, plasticorder: HAAKE BUCHLER SYSTEM 40, set temperature: 140°C, rotation speed: 45 rpm.

### 3. Sheeting air-mark and flow-mark test:

Example formulation: PVC (K=60): 100 parts, organotin stabilizer: 1.1 parts, lubricant: 0.6 parts, time: 3 minutes, sheet thickness: 0.3mm. Sheet air-mark and flow-mark are evaluated via observation.

Comparative example formulation: PVC (K=60): 100 parts, organotin stabilizer: 1.1 parts, processing aid: 1.2 parts, lubricant: 0.6 parts, operation temperature: 190°C, time: 3 minutes, sheet thickness: 0.3mm. Sheet air-mark and flow-mark are evaluated via observation.

### 4. Sheet transparency (%), haze (fogging) (%):

Example formulation: PVC (K=60): 100 parts, organotin stabilizer: 1.1 parts, lubricant: 0.6 parts, operation temperature: 190°C, time: 3 minutes, sheet thickness: 0.3mm. The thickness of the compressed sheet is 0.5cm which is tested with a integration ball type spectrometer (HunterLab ColorQuest XE).

Comparative example formulation: PVC (K=60): 100 parts, organotin stabilizer: 1.1 parts, processing aid: 1.2 parts, lubricant: 0.6 parts, operation temperature: 190°C, time: 3 minutes, sheet thickness: 0.3mm.

The thickness of the compressed sheet is 0.5cm which is tested with a integration ball type spectrometer (HunterLab ColorQuest XE).

The test results of the above 4 performance tests are listed in Table 1.

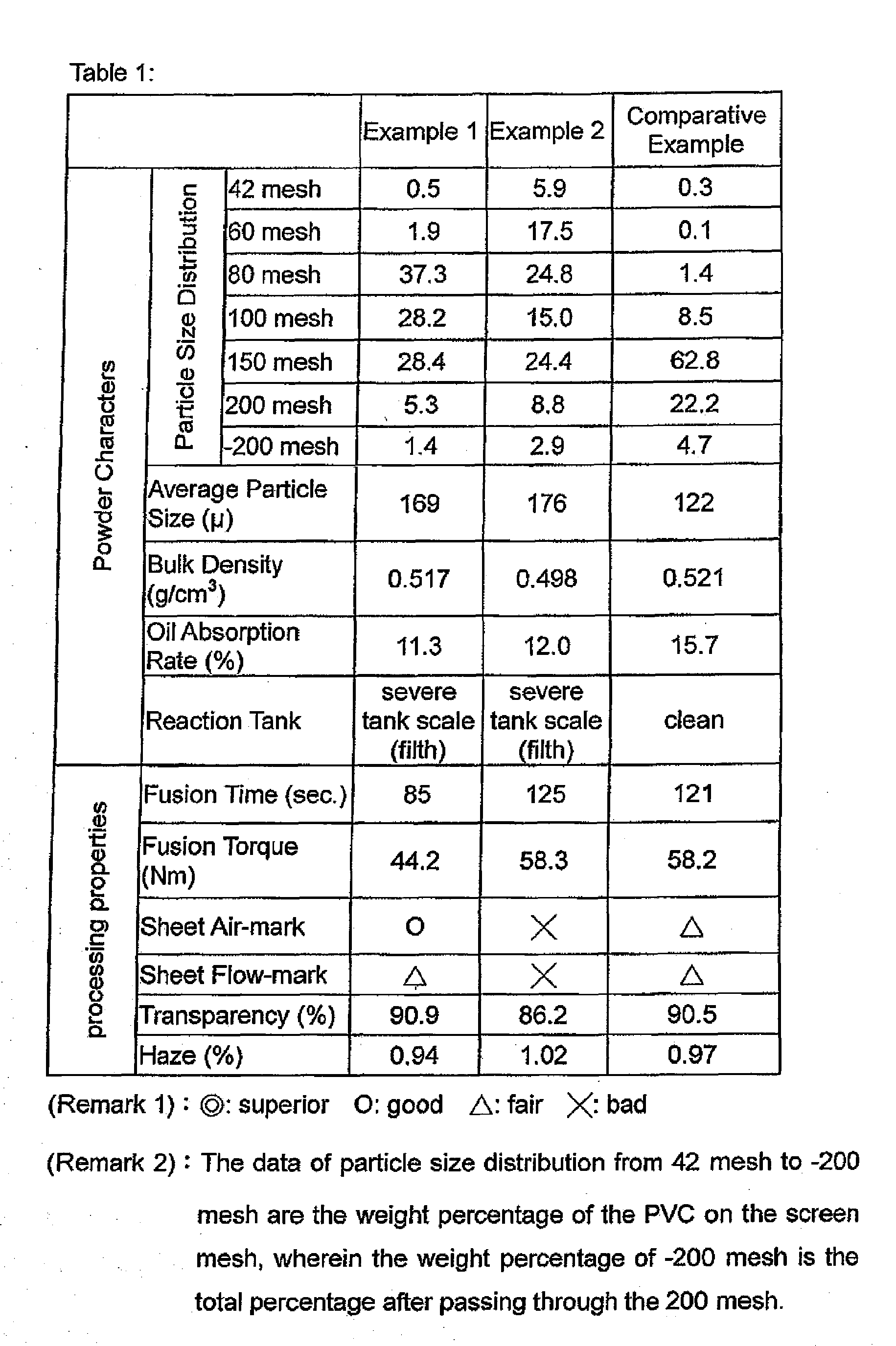

### (Description) :

According to Table 1, the processing properties of Example 1 are better than those of Example 2, and its fusion is obviously faster, thus the continuous injection of the alkyl acrylate monomer liquid mixture is the best process, but the reactor cleanness of Examples 1 & 2 is worse than that of the Comparative Example.

Acrylate/alkyl acrylate polymers latex or powder and vinyl chloride monomer are copolymerized or graft-reacted to obtain a functional polyvinyl chloride, wherein the acrylate polymers are prepared as follows:
Preparation of alkyl acrylate/acrylate polymer latex/powder: 4 different polymers (A`B`C`D) are prepared as follows:
   (1). Preparation of Polymer A:
      720 parts of de-ionic pure water, 2.0 parts of potassium oleate, 0.005 parts of Ethylene Di-amine Tetra Acetic Acid Tertsodium Salt (EDTA) and 0.005 parts of ferrous sulfate (FeSO₄.7H₂O) are added in 1 liter of a polymerization tank, after tightly closing the cover of the tank, vacuumized to -740mmHg and keeping for 10 minutes, nitrogen is introduced to raise the pressure to 1Kg/cm², the temperature is elevated to 40°C under stirring, then 0.25 parts of Sodium Formaldehyde Sulfoxylate (SFS) is incorporated into the reaction tank, after 3 minutes, all of 80 parts of Methyl Methacrylate (MMA), 10 parts of Ethyl Acrylate (EA), 10 parts of Butyl Methacrylate (BMA) and 0.5 parts of Cumyl hydroperoxide (CHP) are added into the tank to conduct the reaction for 1 hour, thus a core-layer latex (A) with a average particle diameter of 128nm is obtained.
   (2). Preparation of polymer (B):
      720 parts of de-ionic pure water, 2.0 parts of potassium oleate, 0.005 parts of Ethylene Di-amine Tetra Acetic Acid Tertsodium Salt (EDTA), 0.005 parts of ferrous sulfate, 0.25 parts of Sodium Formaldehyde Sulfoxylate (SFS), 45 parts of Butyl acrylate (BA), 55 parts of Styrene (SM) and 0.5 parts of Cumyl hydroperoxide (CHP) are added in 1 liter of a polymerization tank, thus a core-layer latex (B) with a average particle diameter of 113nm is obtained.
   (3). Preparation of polymer(C):
      20∼90 parts of core-layer seed latex (A) or (B), 0.01 parts of EDTA and 0.01 part of ferrous sulfate are fed into a 1 liter polymerization tank, after tightly closing the cover of the tank, evacuated to -740mmHg of vacuum and keeping for 10 minutes, nitrogen is introduced to raise the pressure to 1Kg/cm², the temperature is elevated to 40°C under stirring, then 0.35 parts of Sodium Formaldehyde Sulfoxylate (SFS) is incorporated into the reaction tank; 10 minutes later, 0.3 parts of CHP is added, and a mixture of 80 parts of MMA, 20 parts of EA and 4 parts of potassium oleate is continuously injected for 1 hour, subsequently reacting for another one hour, a seed latex (C) with an average particle size of 120∼140nm is resulted.
   (4). Preparation of Polymer (D):
      20∼90 parts of a seed latex made from a proportion range of 0∼100 parts of core-layer latex (A) and 100∼0 parts of core-layer latex (B), 0.01 parts of EDTA and 0.01 parts of ferrous sulfate are put into an one liter polymerization tank, closing the cover of the tank evacuated to -740mmHg of vacuum and keeping for 10 minutes, then nitrogen is injected to recover the pressure to be 1Kg/cm² and 0.35 parts of SFS is added; 10 minutes later, 0.3 parts of CHP is added and a mixture of 80 parts of MMA, 20 parts of EA and 4 parts of potassium oleate is continuously injected for 1 hour, subsequently reacting for another one hour, a seed latex (D) with an average particle size of 130∼50nm is resulted.

### (Description)

Polymer (A) belongs to a single core latex (hard core), Polymer (B) belongs to a single core latex (soft core), Polymer (C) belongs to a single core double layers latex and Polymer (D) belongs to a double core double layers latex, wherein Polymer (A), Polymer (B), Polymer (C) and Polymer (D) can be mixed in a various proportion according to the desired physical properties and then used in the polymerization of vinyl chloride monomer.

### Example 3:

70kg of de-ionic pure water and 36g of a dispersant (PVA with a hydrolysis degree of 78 mol%) are added in a 200 liter polymerization tank, which is then tightly closed and evacuated to -740mmHg of vacuum and kept for 10 minutes, thereafter 70kg of vinyl chloride monomer and 0.56g of a peroxide initiator-BND are incorporated, raising the temperature to 64°C to conduct polymerization; after 2 hours reaction, a latex mixture of polymer (A) and (C) is continuously injected for 30 minutes, wherein the mixing proportion is listed in Table 2; the reaction is kept for further 2.5 hours, then stopping the reaction, the resulted sample powder is collected.

**Table 2:**

| No | Polymer latex (A) (%) | Polymer latex (C) (%) |
|---|---|---|
| 1 | 0.2 | 0 |
| 2 | 0.2 | 0.1 |
| 3 | 0.4 | 0.1 |
| 4 | 0.6 | 0.1 |
| 5 | 0.6 | 0.05 |

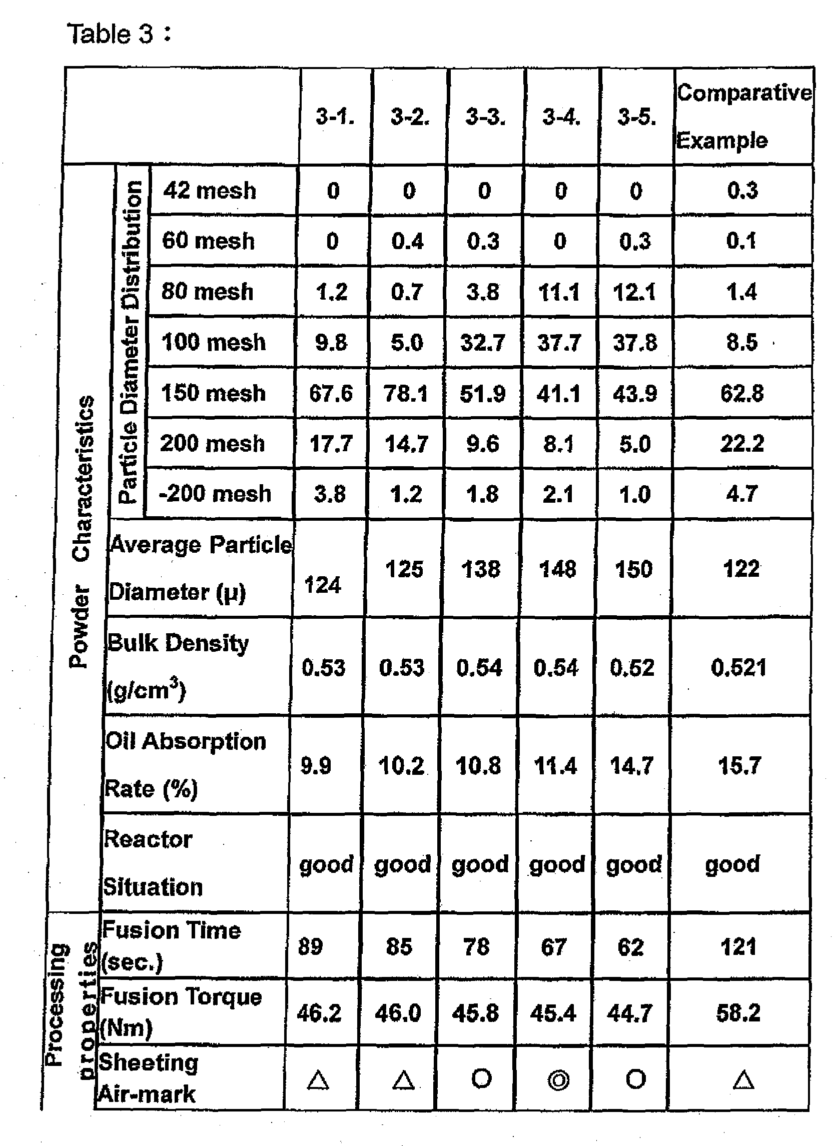

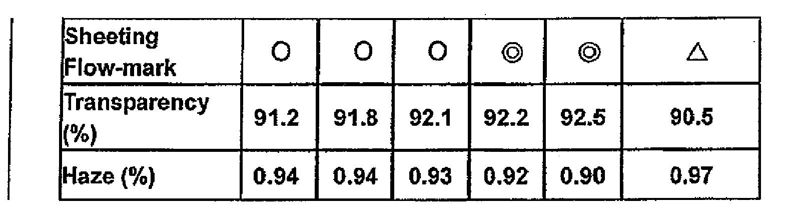

### (Description)

From the data of Table 3, all of Examples 3-1 to 3-5 show better processing properties than those of the comparative example, that means the copolymerization of acrylate polymers and vinyl chloride makes PVC become a functional resin, wherein Example 3-4 exhibits the best performance due to the proper doses of Polymer latex (A) and Polymer latex (C). The comparison between Example 3-4 and Example 3-5 shows Polymer latex (C) is obviously positive to eliminate air-marks.

### Example 4:

70kg of de-ionic pure water, 56g of a dispersant (PVA with a hydrolysis degree of 78 mol%) and a latex mixture of Polymers (B) and (D) wherein the proportion of these two polymers is listed in Table 4 are added in a 200 liter polymerization tank, which is then tightly closed and evacuated to -740mmHg of vacuum and kept for 10 minutes, thereafter 70kg of vinyl chloride monomer and 0.56g of a peroxide initiator-BND are incorporated, raising the temperature to 64°C to conduct polymerization; after 5 hours continuous reaction, then stopping the reaction, the resulted sample powder is collected.

**Table 4:**

| No | Polymer Latex (B) (%) | Polymer Latex (D) (%) |
|---|---|---|
| 1 | 0.2 | 0 |
| 2 | 0.2 | 0.1 |
| 3 | 0.2 | 0.1 |
| 4 | 0.6 | 0.1 |
| 5 | 0.6 | 0.05 |

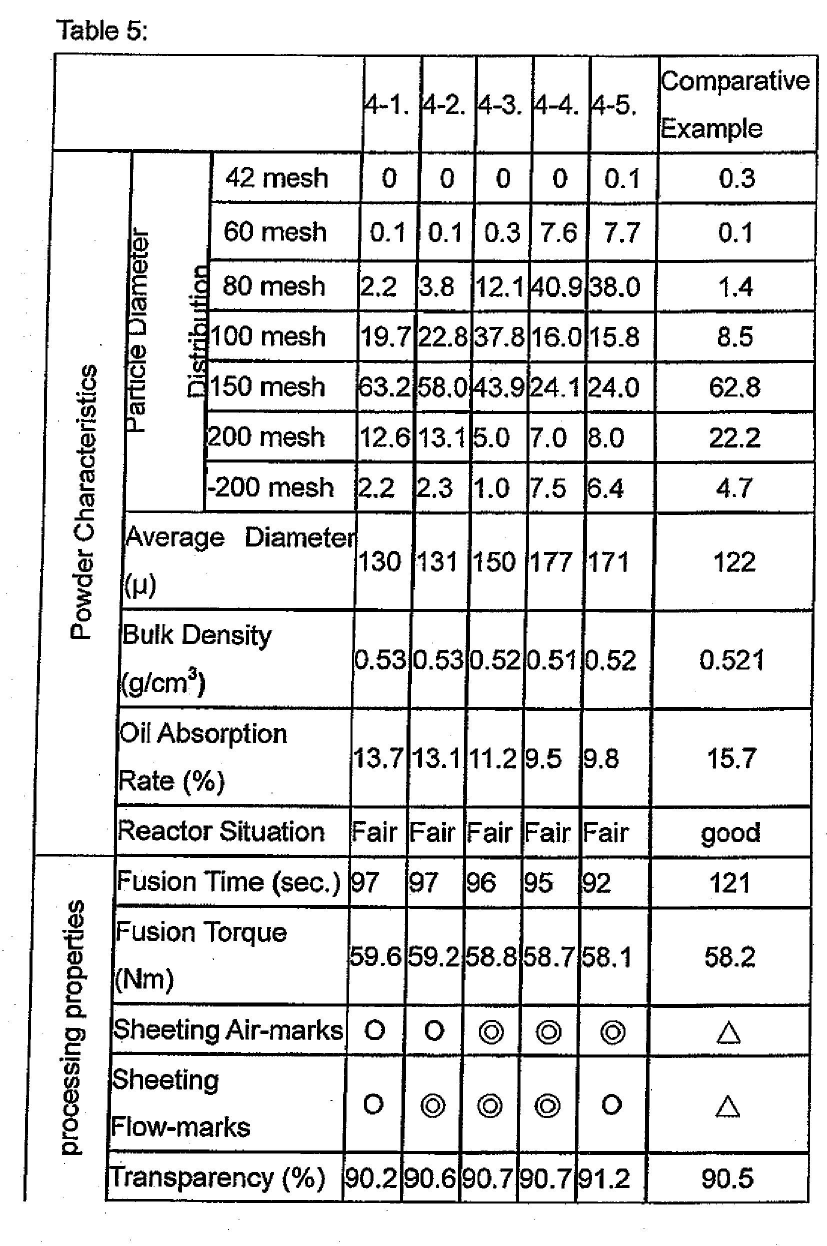

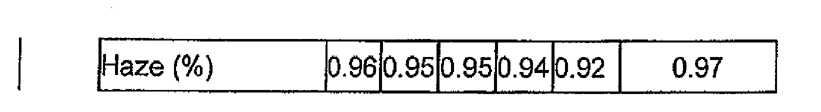

### (Description)

From the data of Table 5, all of Examples 4-1 to 4-5 show better processing properties than those of the Comparative Example, that means, just the same as Example 3, the copolymerization of acrylate polymers and vinyl chloride makes PVC become a functional resin, Polymer latex (B) is obviously assist to eliminate the sheeting air-marks, and Polymer latex (D) can alleviate remarkably the sheeting flow-marks.

### Example 5:

70kg of de-ionic pure water, 36g of a dispersant (PVA with a hydrolysis degree of 78 mol%) and 35g of Polymer latex (A) are added in a 200 liter polymerization tank, which is then tightly closed and evacuated to -740mmHg of vacuum and kept for 10 minutes, thereafter the first stage of vinyl chloride monomer and 0.56g of a peroxide initiator-BND are incorporated, raising the temperature to 64°C to conduct polymerization; after 30 minutes reaction, then the second stage of vinyl chloride monomer is fed to keep a further reaction for 4.5 hours, thereafter stopping the reaction, the resulted sample powder is collected. The proportion of the first stage VCM and the second stage VCM, and the polymer latex fraction by weight are shown in Table 6.

**Table 6:**

| No | 1st stage VCM (kg) | 2nd stage VCM (kg) | Polymer latex fraction (%) |
|---|---|---|---|
| 1 | 21 | 49 | 0.5 |
| 2 | 35 | 35 | 0.5 |
| 3 | 49 | 21 | 0.5 |
| 4 | 21 | 49 | 1.0 |
| 5 | 21 | 49 | 0.5 |

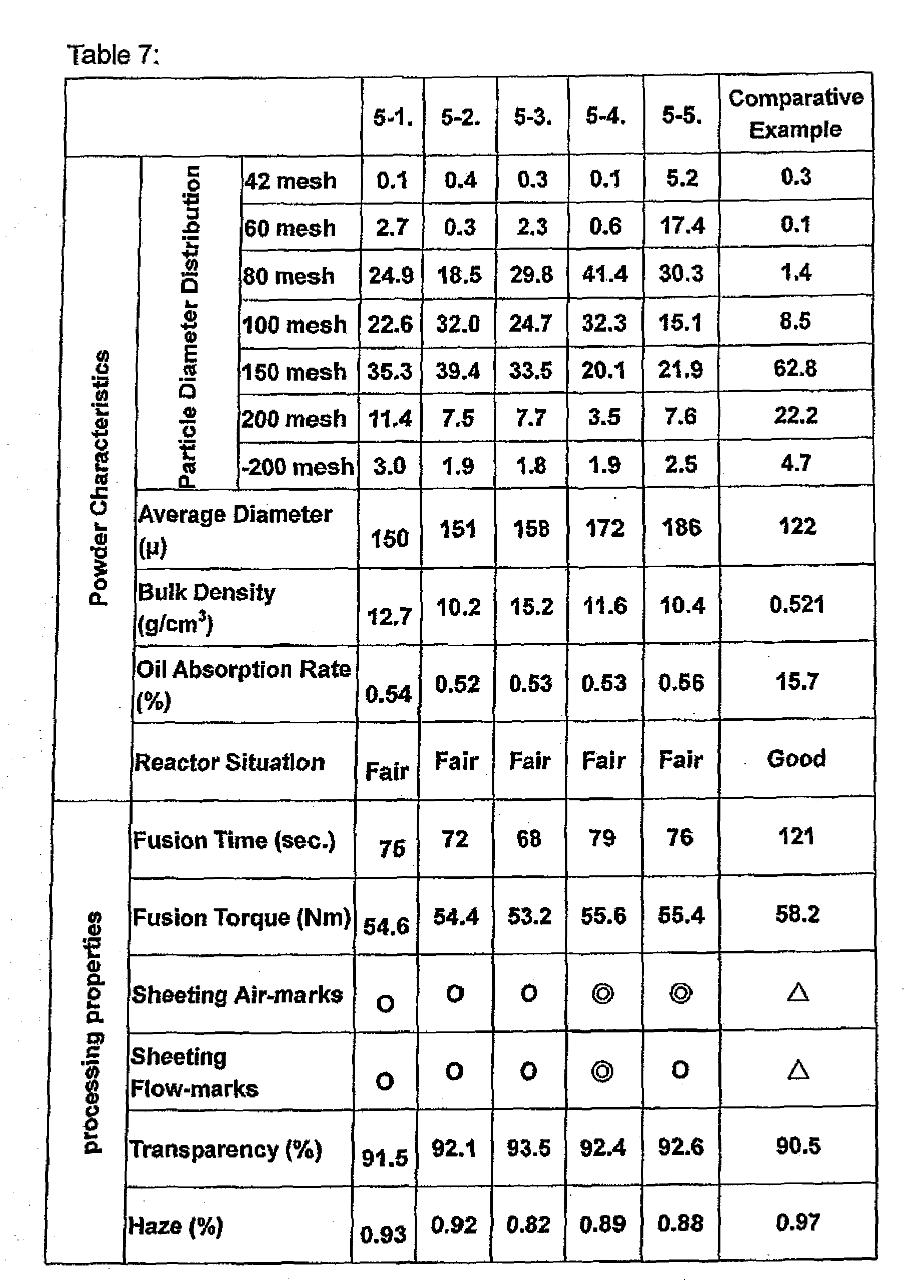

### (Description)

As shown in Table 7, all of the processing properties of Examples 5-1 to 5-5 with a stepwise VCM injection are superior to those of the Comparative Example, wherein the proportion of the first VCM and the second VCM of Example 5-4 is optimal at 3/7, and Polymer latex (A) exhibits remarkably to suppress the sheeting flow-marks.

### Example 6:

70kg of de-ionic pure water and 36g of a dispersant (PVA with a hydrolysis degree of 78 mol%) are added in a 200 liter polymerization tank, which is then tightly closed and evacuated to -740mmHg of vacuum and kept for 10 minutes, thereafter 70kg of vinyl chloride monomer and 0.56g of a peroxide initiator-BND are incorporated, raising the temperature to 64°C to conduct polymerization; after 30 minutes reaction, 140g of polymer (B) is continuously injected for 30 minutes and reacted for further 4.5 hours, then stopping the reaction, the resulted sample powder is collected.

### Example 7:

70kg of de-ionic pure water and 36g of a dispersant (PVA with a hydrolysis degree of 78 mol%) are added in a 200 liter polymerization tank, which is then tightly closed and evacuated to -740mmHg of vacuum and kept for 10 minutes, thereafter 70kg of vinyl chloride monomer and 0.56g of a peroxide initiator-BND are incorporated, raising the temperature to 64°C to conduct polymerization; after 60 minutes reaction, 140g of polymer (C) is continuously injected for 30 minutes and reacted for further 4 hours, then stopping the reaction, the resulted sample powder is collected.

### Example 8:

70kg of de-ionic pure water and 36g of a dispersant (PVA with a hydrolysis degree of 78 mol%) are added in a 200 liter polymerization tank, which is then tightly closed and evacuated to -740mmHg of vacuum and kept for 10 minutes, thereafter 70kg of vinyl chloride monomer and 0.56g of a peroxide initiator-BND are incorporated, raising the temperature to 64°C to conduct polymerization; after 90 minutes reaction, the mixture of 140g of Polymer (D) and 140g of Polymer (A) is continuously injected for 30 minutes and reacted for further 3.5 hours, then stopping the reaction, the resulted sample powder is collected.

### Example 9:

70kg of de-ionic water, 36g of a dispersant (PVA with a hydrolysis degree of 78 mol%) and Polymer (A) powder are added in a 200 liter polymerization tank, which is then tightly closed and evacuated to -740mmHg of vacuum and kept for 10 minutes, thereafter 70kg of vinyl chloride monomer and 0.56g of a peroxide initiator-BND are incorporated, raising the temperature to 64°C to conduct polymerization; after 5 hours reaction, then stopping the reaction, the resulted sample powder is collected.

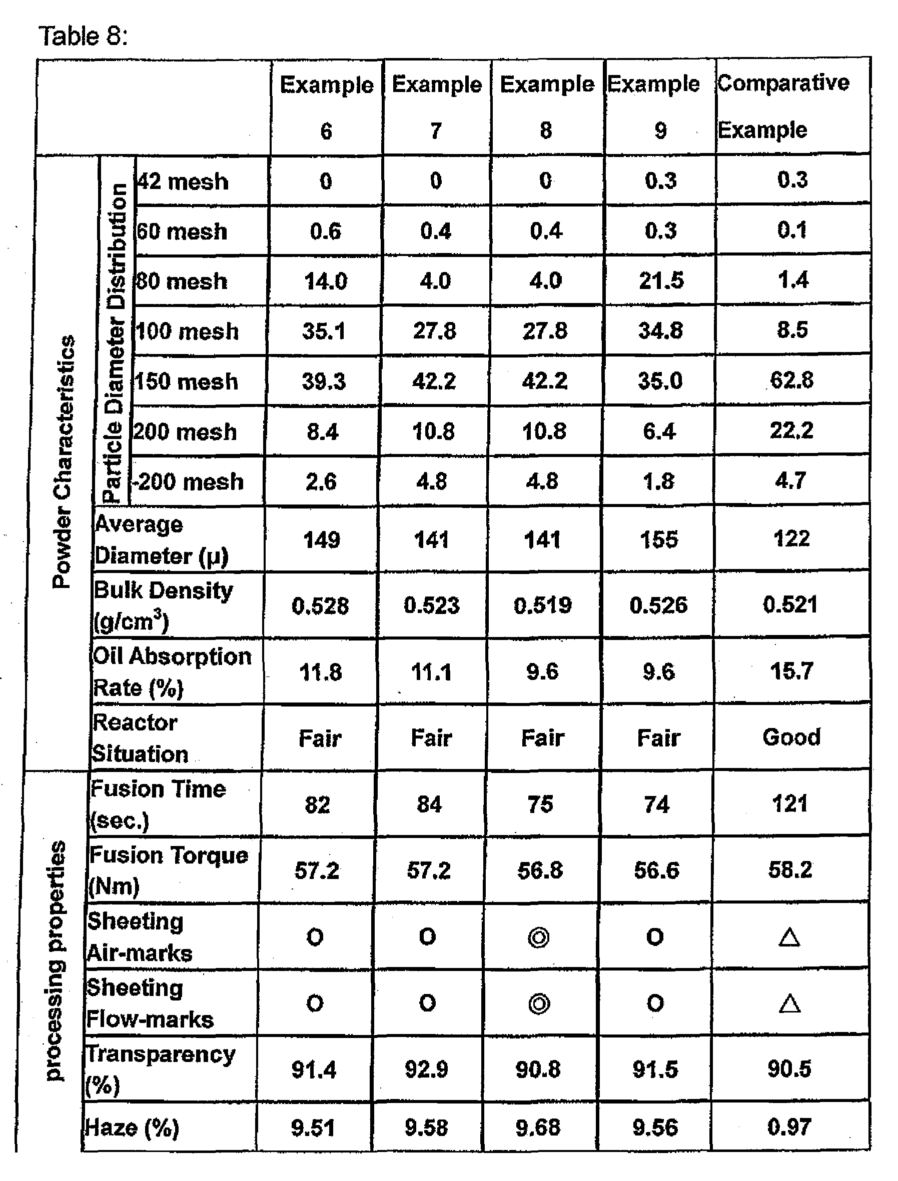

### (Description)

Polymers B, C, D and A are added in Examples 6, 7, 8 and 9 respectively, as shown in Table 8, all of the processing properties of Examples 7-9 are better, wherein the polymer is added into the polymerization tank prior to the beginning of reaction in Example 9 and a number of polymers are used instead of a single polymer in Example 8, both of them result in better sheeting air-marks & flow-marks.

## Claims

1. A process to produce polyvinyl halide resin, **characterized in that:**
(1) 90.0 wt% ∼ 99.9 wt% based on the total composition of vinyl halide monomer or vinyl halide monomer based polymerizable monomer mixture;
(2) 10.0 wt% ∼ 0.1 wt% based on the total composition of alkyl acrylate monomers or alkyl acrylate/acrylate based polymer latex or powder;
are copolymerized or grafted to become a vinyl halide homo-polymer or copolymer resin, wherein the vinyl halide monomer or the vinyl halide monomer based polymerizable monomer mixture can be injected stepwisely in a reactor or added all in one time, while the alkyl acrylate monomers or the alkyl acrylate/acrylate based polymer latex or powder can be continuously fed during polymerization or added prior to the polymerization reaction.

2. The process to produce polyvinyl halide resin according to Claim 1, wherein the vinyl halide homo-polymer or copolymer resin can be produced by solution, bulk or emulsion copolymerization or graft-polymerization.

3. The process to produce polyvinyl halide resin according to Claim 1, wherein the timing of the alkyl acrylate monomers feeding during polymerization is from the beginning of polymerization to the end of polymerization for a continuous injection to use up all of the alkyl acrylate monomers at the termination of the polymerization reaction.

4. The process to produce polyvinyl halide resin according to Clam 1, wherein the vinyl halide monomer can be mainly vinyl chloride monomer; while the vinyl halide monomer based polymerizable monomer mixture further includes vinyl alkanoates, vinylidene halides, alkyl esters of carboxylic acids or unsaturated hydrocarbons, and the fraction of vinyl halide monomer is not less than 55 wt%.

5. The process to produce polyvinyl halide resin according to Claim 1, wherein the alkyl acrylate monomers can be methyl methacrylate, ethyl methacrylate, n-propyl methacrylate, isopropyl methacrylate, n-butyl methacrylate, isobutyl methacrylate, stearyl methacrylate, phenyl methacrylate, benzyl methacrylate; all of them can be substituted with the following groups: halogen, hydroxyl, alkoxy, alkylthio and cyano etc..

6. The process to produce polyvinyl halide resin according to Claim 1, wherein the dose of the alkyl acrylate monomers or the alkyl acrylate/acrylate based polymer latex is 10.0% ∼ 0.01 %, most preferably 4.0% ∼ 0.02% based on the total weight of the vinyl halide monomer or the polymerizable monomer mixture, the dose of the alkyl acrylate monomers or the alkyl acrylate/acrylate based polymer powder is 10.0% ∼ 0.1%, most preferably 8.0% ∼ 0.2% based on the total weight of the vinyl halide monomer or the polymerizable monomer mixture.

7. The process to produce polyvinyl halide resin according to Claim 1, wherein the alkyl acrylate monomers or the alkyl acrylate/acrylate based polymer latex can be charged into polymerization tank prior to reaction or during reaction, i.e. continuously fed until using-up; while the alkyl acrylate/acrylate based polymer powder is incorporated into the polymerization tank prior to reaction, then the polymerization reaction is proceeded.

8. The process to produce polyvinyl halide resin according to Claim 1, wherein the vinyl halide monomer or the vinyl halide monomer based polymerizable monomer mixture can be injected stepwisely in reactor or added all in one time, and in the first step of the stepwise mode, 50 ∼ 70% of the polymerizable monomer mixture is added, while in the second step, the rest 50 ∼ 30% is continuously fed into the reactor.

9. The process to produce polyvinyl halide resin according to Claim 1, wherein the alkyl acrylate/acrylate based polymer latex/powder can be produced by solution, bulk or emulsion polymerization in the mode of an optional grafting or core-shell structures, and the said structures including unicore-unishell, unicore-multishell, multicore-unishell or multicore-multishell, while the powder can be produced by spray dryer and salt out.
